# EUROPÄISCHE PATENTSCHRIFT

(11) **EP 2 480 314 B1**
(45) Veröffentlichungstag und Bekanntmachung des Hinweises auf die Patenterteilung: **20.11.2013**
(21) Anmeldenummer: 10760605.5
(22) Anmeldetag: 22.09.2010
(51) Int. Cl.: B01D 53/14, B01D 53/26, C10L 3/10

(54) **VERFAHREN UND VORRICHTUNG ZUR ENTFERNUNG VON WASSER AUS ERDGAS ODER INDUSTRIEGASEN MIT PHYSIKALISCHEN LÖSUNGSMITTELN**
METHOD AND DEVICE FOR REMOVING WATER FROM NATURAL GAS OR FROM INDUSTRIAL GASES WITH PHYSICAL SOLVENTS
PROCÉDÉ ET DISPOSITIF PERMETTANT D'ÉLIMINER L'EAU CONTENUE DANS UN GAZ NATUREL OU DES GAZ INDUSTRIELS AU MOYEN DE SOLVANTS PHYSIQUES

(30) Priorität: 23.09.2009 DE 102009042365
(43) Veröffentlichungstag der Anmeldung: 01.08.2012
(73) Patentinhaber: ThyssenKrupp Uhde GmbH, 44141 Dortmund (DE)
(72) Erfinder: MENZEL, Johannes, 45731 Waltrop (DE)
(86) Internationale Anmeldenummer: PCT/EP2010/005789
(87) Internationale Veröffentlichungsnummer: WO 2011/035896

(56) Entgegenhaltungen:
- EP-A1- 0 020 967
- WO-A1-94/11090
- US-A- 4 578 094
- US-A- 4 979 966
- US-A1- 2004 115 109

## Beschreibung

Die Erfindung betrifft ein Verfahren zur Entfernung von Wasser aus Erd- oder Industriegasen mit physikalischen Lösungsmitteln, wobei das Gas sowohl von Wasser als auch von mitgeführten Sauergasen befreit wird, und das gereinigte Industriegas einen deutlich reduzierten Wassergehalt aufweist, so dass eine weitere Trocknung des Industriegases vor der anschließenden Verwendung entfallen kann. Die Erfindung betrifft auch eine Anlage als Vorrichtung, mit der dieses Verfahren ausgeführt werden kann, wobei diese Vorrichtung mindestens zwei Absorptionskolonnen und eine Regenerationskolonne, oder vergleichbar geartete Vorrichtungen, und zugehörige Lösungsmittelabscheider umfasst.

Erdgas muss vor der Bereitstellung getrocknet werden, da die Einspeisung in das Leitungsnetz ohne Trocknung zu Korrosion des Leitungsnetzes führen würde. Desweiteren muss durch die Entfernung von Wasser sichergestellt werden, dass es zu keiner Eisbildung bei niedrigen Umgebungstemperaturen kommen kann. Häufig werden für diesen Zweck Glykolverbindungen als Absorptionsmittel zur Wasserentfernung eingesetzt. Dabei werden in dem Erdgas enthaltene Sauergase teilweise mitabsorbiert, so dass nach der Absorption ein wasserhaltiges, mit Sauergasen beladenes Lösungsmittel anfällt.

Für die Absorption von Sauergasen aus Erdgasen oder Industriegasen ist es von Vorteil, das Einsatzgas vor dem Eintritt in die Sauergaswäsche zu trocknen, da sich ansonsten das Wasser aus dem Einsatzgas im Lösungsmittel anreichern würde und da die Sauergasabsorptionskapazität eines mit Wasser beladenen Lösungsmittels vermindert ist. Die notwendige Wasserentfernung aus dem Einsatzgas kann beispielsweise durch einen vorgeschalteten Trocknungsprozess mit einem wasseraufnehmenden Absorptionsmittel, wie mit einer Glykolverbindung oder einem Molsieb vorgenommen werden.

Die US 6299671 B1 beschreibt ein Verfahren zur Regeneration von wasserhaltigem Triethylenglykol, welches als Lösungsmittel zur Absorption von Wasser und Sauergasen aus industriellen Gasen genutzt wird, und welches zur Regeneration zunächst in eine Regenerationskolonne gegeben wird, wobei Gas und Wasser am Kopf der Kolonne entnommen werden, und wobei das regenerierte Lösungsmittel zur weiteren Regeneration in eine Stripping-Kolonne gegeben werden kann, wobei in die Regenerationskolonne ein Strippgas gegeben wird, welches im Gegenstrom zu dem zu regenerierenden Lösungsmittel geführt wird, so dass der Trocknungsprozess wesentlich intensiviert wird, wobei als Strippgas das Gas verwendet wird, welches bei der Regeneration des Lösungsmittels über Kopf der Kolonne entnommen wird. Der Prozess lässt sich jedoch nur verwenden, wenn das zu reinigende Gas keine größeren Mengen an Sauergas enthält.

Die WO 2007/000217 A2 beschreibt ein Verfahren zur Absorption von Sauergasen enthaltenden, unter Druck befindlichen Erdgasen mittels physikalisch wirkender Absorptionsmittel, wobei das Erdgas zunächst in eine Absorptionskolonne geführt wird, und ein Teil des beladenen Waschmittels in einen Lösungsmittelabscheider mit aufgesetzter Absorptionskolonne geführt wird, in dem ein sauergasarmes Strippgas und ein beladenes Lösungsmittel erhalten werden, und das beladene Lösungsmittel in einen weiteren Lösungsmittelabscheider und eine Stripp-Kolonne geleitet werden, und die Stripp-Kolonne mit dem sauergasarmen Strippgas durchströmt wird, so dass man ein regeneriertes Lösungsmittel erhält, welches in zwei Teilströme aufgeteilt wird, wobei der erste Teilstrom in die erste Absorptionskolonne geführt wird, und der zweite Teilstrom in die aufgesetzte Absorptionskolonne geführt wird, und aus dem zweitem Abscheider das Sauergas und aus dem ersten Abscheider das gereinigte Erdgas erhalten werden. Der Prozess lässt sich nur verwenden, wenn der Wassergehalt des zu reinigenden Erdgases so weit reduziert ist, das es zu keiner starken Anreicherung von Wasser im Lösungsmittel kommt.
US 4 979 966 beschreibt ein Verfahren und ein Vorrichtung zur Trocknung von und Entfernung von Sauergasen aus Erdgas. Dies geschieht mit einem Lösungsmittel in zwei Schritten, wobei in einer ersten Kolonne Wasserdampf entfernt wird und in einer zweiten Kolonne die noch vorhandenen Sauergase.

Im Hinblick auf eine Gesamtanlage wäre es von Vorteil, wenn das Lösungsmittel, welches für die Entfernung von Sauergasen eingesetzt wird, auch für die vorgeschaltete Trocknung des Gases genutzt wird. Dadurch werden keine zusätzlichen Hilfseinrichtungen benötigt, wozu Lagertanks, Auffangbehälter oder weitere Einrichtungen gehören.

Die meisten als Absorptionsmittel für die Sauergasentfernung verwendeten physikalischen Lösungsmittel neigen bei Temperaturen um 200 °C, wie sie bei der Regeneration von Glykolen auftreten, zur Zersetzung. Es wäre daher besonders günstig, die Regeneration des verwendeten physikalischen Lösungsmittels in dem Trocknungsprozess so zu gestalten, dass diese bei deutlich niedrigeren Temperaturen von bis zu 150 °C erfolgt.

Erfindungsgemäß wird dies dadurch erreicht, dass das zu reinigende Gas zunächst durch eine Absorptionskolonne geführt wird, in der dieses Gas mit einem physikalischen Lösungsmittel in Kontakt gebracht wird, in der das in dem zu reinigenden Gas enthaltene Wasser und ein Teil des Sauergases absorbiert werden, und das den Absorber am Sumpf verlassende, mit Wasser und Sauergas angereicherte Lösungsmittel in eine Lösungsmittelregenerationseinrichtung geführt wird, und das von Wasser und einem Teil der Sauergase gereinigte Gas in eine zweite nachgeschaltete Absorptionskolonne, die für die eigentliche Sauergasentfernung vorgesehen ist, geführt wird, wo ein vollständig oder nahezu vollständig gereinigtes Gas erhalten wird, und ein mit den restlichen Sauergasen beladenes Lösungsmittel. Erfindungsgemäß wird das dort erhaltene mit den restlichen Sauergasen beladene Lösungsmittel in einer Sauergaslösungsmittelregenerationseinrichtung entspannt, wobei ein gereinigtes Lösungsmittel erhalten wird, und ein Sauergas, welches erfindungsgemäß in zwei Teilströme geteilt wird, wobei der erste Teilstrom des Sauergases ausgeschleust oder einer Fremdverwendung zugeführt wird, und der zweite Teilstrom in die Lösungsmittelregenerationseinrichtung oder in den Sumpf des Aufkochers der Lösungsmittelregenerationseinrichtung geführt wird.

Der Teilstrom des Sauergases, der in den Sumpf des Aufkochers geführt wird, durchströmt die Regenerationskolonne im Gegenstrom zu dem mit Wasser angereicherten Lösungsmittel. Das zu regenerierende Lösungsmittel wird - entsprechend den Erfordernissen der jeweiligen Gastrocknung - nahezu vollständig von Wasser befreit und wird daran anschließend in die zur Trocknung vorgesehene erste Absorptionskolonne zurückgeführt. Dabei wird die Eigenschaft ausgenutzt, dass in der Regel die Aufnahmekapazität für Wasser bei physikalischen Lösungsmitteln größer ist als für Sauergase. Die zusätzliche Strippung mit Sauergas ermöglicht es, den Regenerationsprozess in der Regenerationskolonne bei Temperaturen von unter 150 °C durchzuführen.

Beansprucht wird daher insbesondere ein Verfahren zur Entfernung von Wasser oder Wasserdampf aus technischen Nutzgasen durch Absorption mit einem physikalischen Lösungsmittel, wobei
- das Nutzgas dampfförmiges Wasser und Sauergaskomponenten, enthält, und
- das zu trocknende sauergas- und wasserhaltige Nutzgas mit dem physikalischen Lösungsmittel in Kontakt gebracht wird, wobei ein weitgehend wasserfreies, sauergashaltiges Nutzgas und ein wasserhaltiger Lösungsmittelstrom erhalten werden, und
- der dabei erhaltene wasserhaltige Lösungsmittelstrom einer Lösungsmittelregenerationseinrichtung zugeführt wird, wobei ein Lösungsmittel mit vermindertem Wassergehalt erhalten wird, welches dann wieder zur Absorption des Wassers aus dem Nutzgas zurückgeführt wird und wieder mit dem Nutzgas in Kontakt gebracht wird, und
- der nach der Absorption des Wassers aus dem Nutzgas getrocknete Nutzgasstrom in eine nachgeschaltete Sauergasentfernungseinrichtung geführt wird, wobei das gleiche, bereits in der Gastrocknung verwendete Lösungsmittel auch für die Sauergasentfernung genutzt wird, und ein von Sauergaskomponenten weitgehend befreites Nutzgas und ein sauergashaltiges Lösungsmittel erhalten werden, und
- das mit Sauergaskomponenten beladene Lösungsmittel in eine Sauergaslösungsmittelregenerationseinrichtung geführt wird, in der ein regeneriertes Lösungsmittel und das aus der Lösung ausgetriebene Sauergas erhalten werden,
   welches dadurch gekennzeichnet ist, dass
- der in der Sauergaslösungsmittelregenerationseinrichtung gewonnene Sauergasstrom in zwei Teilströme aufgeteilt wird, wobei der erste Teilstrom einer Verwendung zugeführt wird oder entsorgt wird, und
- wobei der zweite Teilstrom des Sauergases in die für den Trocknungsprozess zugehörige Lösungsmittelregenerationseinrichtung zugeführt wird, in der das im Lösungsmittel angereicherte Wasser mit Hilfe des zweiten Sauergasteilstroms aus dem Lösungsmittel ausgetrieben wird, wobei das ausgetriebene Wasser als Wasserdampf zusammen mit dem Sauergas die Lösungsmittelregenerationseinrichtung verlässt.

Das Inkontaktbringen des absorbierenden Lösungsmittels mit dem zu reinigenden Nutzgas findet bevorzugt in einer Absorptionskolonne statt. Bei der Lösungsmittelregenerationseinrichtung handelt es sich bevorzugt um eine Regenerationskolonne. Diese kann einen Aufkocher (Reboiler) enthalten. Bei der Sauergasentfernungseinrichtung handelt es sich bevorzugt ebenfalls um eine Absorptionskolonne. Bei der Sauergaslösungsmittelregenerationseinrichtung handelt es sich bevorzugt um einen oder mehrere "Flash"-Behälter. Der zweite Teilstrom des Sauergases kann an beliebiger Stelle in die Lösungsmittelregenerationseinrichtung geführt werden. Beispielhaft kann dieser in den Aufkocher der Lösungsmittelregenerationseinrichtung geführt werden.

Die Lösungsmittelregenerationseinrichtung kann so betrieben werden, dass der zweite Teil des Sauergasstroms aus der Sauergaslösungsmittel-regenerationseinrichtung in den Sumpf der Lösungsmittelregenerationseinrichtung geführt wird, wobei das dem Sumpf der Lösungsmittelregenerationseinrichtung zugeführte Sauergas das im Lösungsmittel enthaltene Wasser aus dem im Gegenstrom herabfließenden Lösungsmittel austreibt, und das ausgetriebene Wasser als Wasserdampf zusammen mit dem Sauergas die Lösungsmittelregenerationseinrichtung über Kopf verlässt.

Die Lösungsmittelregenerationseinrichtung kann auch so betrieben werden, dass der zweite Teilstrom des Sauergases in den Sumpf des der Lösungsmittelregenerationseinrichtung zugehörigen Aufkochers zugeführt wird, wobei das in den Sumpf des Aufkochers zugeführte Sauergas das im Lösungsmittel enthaltene Wasser austreibt, und das ausgetriebene Wasser als Wasserdampf zusammen mit dem Sauergas in den Sumpf der Lösungsmittelregenerationseinrichtung geführt wird, und dort ebenfalls im Gegenstrom das Wasser als Wasserdampf zusammen mit dem Sauergas aus dem herabfließenden Lösungsmittelstrom austreibt.

Beispiele für Sauergaskomponenten, die besonders häufig in dem erfindungsgemäßen Verfahren absorbiert werden, sind Schwefelwasserstoff (H₂S), Kohlendioxid (CO₂), Kohlenoxidsulfid (COS), Merkaptane oder ein Gemisch dieser Gase. Bei dem Durchströmen des Sauergases im Gegenstrom wird das Wasser vollständig oder nahezu vollständig aus dem Lösungsmittel entfernt. Das über Kopf aus der Regenerationskolonne ausgeführte Wasser enthält größere Anteile an Sauergas. Das aus dem Lösungsmittel entfernte Wasser, das als Wasserdampf zusammen mit den Sauergaskomponenten den Kopf der Regenerationskolonne verlässt wird in einer vorteilhaften Ausführungsform auskondensiert. Das gewonnene, überwiegend aus Wasser bestehende Kondensat wird zurück auf den Kopf der Regenerationskolonne gegeben. Ein Teilstrom des gewonnen Kondensats kann abgezogen und aus dem Prozess ausgeschleust und entsorgt werden. Mittels dieses Kondensatstroms werden noch in den Kopfdämpfen vorhandene Lösungsmittelanteile zurückgewaschen, so dass die den Kopfkondensator der Regenerationskolonne verlassenden Sauergasbrüden nahezu kein Lösungsmittel mehr enthalten.

In einer weiteren, vorteilhaften Ausführung der Erfindung wird das die Regenerationskolonne über Kopf verlassende nahezu lösungsmittelfreie Sauergas weiter abgekühlt, so dass der darin enthaltene übrige Wasserdampf kondensiert und das in dem Sauergas enthaltene Wasser aus dem Prozess vollständig ausgeschleust und entsorgt werden kann.

Der die Regenerationskolonne der Gastrocknungseinrichtung verlassende Sauergasstrom kann nach erfolgter Kondensation und Abtrennung des Kondensates mit dem Sauergasstrom aus der Sauergasentfernungseinrichtung vereinigt werden. Alternativ kann der die Regenerationskolonne der Gastrocknungseinrichtung über Kopf verlassende Sauergasstrom auch nach der Abtrennung des Kondensates und nach der Abtrennung des Wassers mit dem Sauergasstrom aus der Sauergasentfernungseinrichtung vereinigt werden. Dies ist insbesondere dann von Vorteil, wenn das Sauergas nicht emittiert werden darf oder soll. Beispiele für unerwünschte Emissionsgase sind Schwefelkomponenten, wie Schwefelwasserstoff (H₂S), Kohlenoxidsulfid (COS) und Merkaptane.

Dadurch, dass das Wasser durch die zusätzliche Strippwirkung des Sauergases aus dem Lösungsmittel entfernt wird, ist es in vorteilhafter Weise möglich, die Wasserentfernung aus dem Lösungsmittel in einem Temperaturbereich von 50 bis 180 °C durchzuführen, wobei die Vorwärmung durch einen Vorwärmer oder durch einen Aufkocher (Reboiler) erfolgt. In einer besonders vorteilhaften Ausführungsform wird das Wasser aus dem physikalischen Lösungsmittel bei einer Temperatur von 100 bis 140 °C entfernt.

In einer weiteren Ausführungsform der Erfindung wird das aus der Regenerationskolonne der Trocknungseinrichtung kommende und von Wasser weitgehend befreite Lösungsmittel mit einem Kühler oder Wärmetauscher gekühlt, bevor es wieder mit dem zu reinigenden Gas in Kontakt gebracht wird. Für den Fall, dass das die Trocknungseinrichtung verlassende Sauergas mit der Hauptmenge des Sauergases aus der Sauergasentfernungseinrichtung für eine Weiterverarbeitung zusammengeführt werden soll, wird dabei das für die Strippung in der Regenerationskolonne verwendete Sauergas entweder mit einem Verdichter oder einem Gebläse auf einen geringfügig höheren Druck verdichtet oder es wird ein Sauergastrom aus der Sauergaslösungsmittelregenerationsreinrichtung abgezweigt, der auf einem höheren Druckniveau anfällt. Damit ist es möglich, alle Sauergase, also auch die in der Trocknung anfallenden Sauergase zu entsorgen, oder zu vermeiden, dass Sauergase in die Atmosphäre emittiert werden.

Bei dem physikalischen Lösungsmittel für die Wasserentfernung handelt es sich typischerweise um Lösungsmittel, wie sie im Stand der Technik üblich sind. In einer Ausführungsform des erfindungsgemäßen Verfahrens handelt es sich um N-Formylmorpholin oder Mischungen aus N-Formylmorpholin mit Morpholinderivaten. In einer weiteren Ausführungsform des Verfahrens handelt es sich bei dem physikalischen Lösungsmittel um Propylencarbonat. In einer weiteren Ausführungsform des Verfahrens handelt es sich bei dem physikalischen Lösungsmittel um alkylierte Polyalkylenglykole.

Bei dem zu reinigenden technischen Nutzgas handelt es sich bevorzugt um Erdgas. Bei den zu reinigenden technischen Gasen kann es sich beispielhaft auch um Raffineriegase, Kokereigase oder um Gase in der chemischen Industrie handeln.

Der Druck des erfindungsgemäßen Verfahrens kann beliebig eingestellt werden. Beispielhaft wird in der ersten Absorptionskolonne ein Druck von 50 bar bis 100 bar eingestellt. In der Lösungsmittelregenerationseinrichtung wird beispielhaft ein Druck von 0 bar bis 10 bar eingestellt. In der Lösungsmittelregenerationseinrichtung wird bevorzugt ein Druck von 0,5 bar bis 5 bar eingestellt. In der Lösungsmittelregenerationseinrichtung fällt das Sauergas beispielsweise bei einem Druck von 3 bar bis 1 bar an.

Beansprucht wird auch eine Vorrichtung zur Entfernung von Wasser oder Wasserdampf aus technischen Nutzgasen durch Absorption mit einem physikalischen Lösungsmittel, wobei die erfindungsgemäße Vorrichtung
- mindestens eine Absorptionskolonne für die Gastrocknung,
- mindestens eine Lösungsmittelregenerationseinrichtung für das aus der Absorbtionsolonne der Gastrocknung stammende wasserhaltige Lösungsmittel,
- mindestens eine weitere Absorptionskolonne für das getrocknete und sauergashaltige Nutzgas,
- mindestens eine Sauergaslösungsmittelregenerationseinrichtung,
   umfasst, und welche dadurch gekennzeichnet ist, dass
- der Lösungsmittelsumpfstrom der für die Gastrocknung vorgesehenen Absorptionskolonne auf den Kopf der Lösungsmittelregenerationseinrichtung führbar ist, und
- der Lösungsmittelsumpfstrom der Lösungsmittelregenerationseinrichtung nach der Wasserentfernung zurück in die erste, für die Gastrocknung vorgesehene Absorptionskolonne führbar ist, und
- das getrocknete Gas der Sauergasentfernungseinrichtung zuführbar ist, welche mittels eines regenerierten Lösungsmittelstroms die im Einsatzgas enthaltenen Sauergaskomponenten weitgehend entfernt, und das die Sauergasentfernungseinrichtung am Sumpf verlassende, mit Sauergasen beladene Lösungsmittel in eine Sauergaslösungsmittelregenerationseinrichtung führbar ist, und ein Teilstrom des in der Sauergaslösungsmittelregenerationseinrichtung gewonnenen Sauergases in den Sumpf der der Absorptionskolonne zugehörigen Lösungsmittelregenerationseinrichtung oder in den Sumpf des dazu gehörigen Aufkochers führbar ist, und
- der Kopfgasstrom der Lösungsmittelregenerationseinrichtung einem Sauergasstrom aus der Sauergaslösungsmittelregenerationseinrichtung zumischbar ist oder ausgeführt wird.

Die Lösungsmittelregenerationseinrichtung kann einen Aufkocher ("Reboiler") enthalten. Bei der Lösungsmittelregenerationseinrichtung handelt es sich bevorzugt um eine Regenerationskolonne. Bei der Regenerationseinrichtung der Sauergasentfernungseinrichtung (Sauergaslösungsmittelregenerationseinrichtung) handelt es sich bevorzugt um eine oder mehrere Flash-Behälter. Bei der Sauergasentfernungseinrichtung handelt es sich bevorzugt um eine Absorptionskolonne. In einer weiteren Ausgestaltung der Erfindung enthält die Vorrichtung zur Entfernung von Wasser oder Wasserdampf aus technischen Gasen in der Verbindungsleitung zwischen dem Sauergasstrom aus der Sauergaslösungsmittelregenerationseinrichtung der Sauergasentfernungseinrichtung und der Regenerationskolonne der Trocknungsanlage ein Verdichter oder ein Gebläse, welches dazu dient, den Druckverlust über die Sauergaslösungsmittelregenerationseinrichtung auszugleichen.

Die erfindungsgemäße Vorrichtung enthält Absorptionskolonnen, die eine Gaswäsche durch Inkontaktnahme mit einem sauergasabsorbierenden Lösungsmittel ermöglichen. Die Absorptionskolonne kann beliebig geartet sein und enthält bevorzugt Stoffaustausch ermöglichende Böden oder Füllkörper. Füllkörper können "Pall-Ringe", Raschig-Ringe, strukturierte Packungen oder Sattelkörper sein. Auch die Flash-Behälter können beliebig geartet sein. Zu der erfindungsgemäßen Vorrichtung gehören außerdem noch Kompressoren, Pumpen, Ventile, Rohrleitungen, Steuerungselemente, Filtereinrichtungen und Messeinrichtungen, je nach Anforderung. Zu der erfindungsgemäßen Vorrichtung gehören auch Aufkocher (Reboiler), Erhitzer, oder Kühler. Die erfindungsgemäße Vorrichtung enthält auch Flüssigkeitsabscheider zur Abscheidung von Flüssigkeiten aus der Gasphase. Diese können in beliebiger Zahl vorhanden sein.

Das erfindungsgemäße Verfahren besitzt den Vorteil eines effizienten Trocknungsverfahrens für Industriegase und für Brenngase, welches mit einem sauergasabsorbierenden Lösungsmittel betrieben wird, wobei das für die Sauergasentfernung verwendete Absorptionsmittel auch für die Trocknung der Gase genutzt wird. In vorteilhafter Weise kann dabei die Regeneration des Lösungsmittels in der Lösungsmittelregenerationseinrichtung bei Temperaturen von unter 150 °C betrieben werden, so dass sich konventionelle Lösungsmittel nicht zersetzen. Die Wasserentfernung kann dabei so eingestellt werden, dass bei der nachfolgenden Sauergasentfernungseinrichtung keine unerwünschte Wasseranreicherung auftritt.

Die erfindungsgemäße Ausgestaltung einer Vorrichtung zur Reinigung eines sauergashaltigen Kohlenwasserstoffstromes wird anhand einer Zeichnung genauer erläutert, wobei die erfindungsgemäße Vorrichtung und das damit ausgeführte Verfahren nicht auf diese Ausführungsform beschränkt sind.

In einer ersten Absorptionskolonne (**1**) wird ein von Sauergasen und Wasser zu reinigendes Industriegas oder Erdgas (**2**) gegeben. Dieses strömt aufwärts in der Kolonne, wobei Wasser und ein Teil der Sauergase entfernt werden. Das im wesentlichen wasserfreie Erdgas (**3**) wird am Kopf der Kolonne (**1a**) entnommen. Am Sumpf der Kolonne fällt ein mit Wasser und Sauergasen beladenes Lösungsmittel (**4**) an. Dieses wird über einen Wärmetauscher (**5**) auf den Kopf einer Regenerationskolonne (**6**) aufgegeben. Dort wird es mit Hilfe des im Sumpf (**6a**) zugeführten Sauergasstroms, der im Gegenstrom zu der auf den Kopf aufgegebenen Lösung geführt wird, von Wasser und den mitgeführten Sauergasen befreit. Der am Kopf der Regenerationskolonne (**6**) ausgeführte Kopfgasstrom (**7**) wird über einen Kühler (**8**) gekühlt, das gekühlte, wasserhaltige Kondensat zum Teil zurückgeführt (**8a**) und zum Teil ausgeschleust (**8b**) und das übrige Wasser in einem Kondensator (**9**) auskondensiert und ausgeschleust (**9a**). Der erhaltene Sauergasstrom wird auf das niedrigste Druckniveau der Sauergasentfernungseinrichtung, in dieser Konfiguration dem Druck des letzten Flash-Behälters (**17c**) zurückgeführt und zusammen mit dem Flashgas aus diesem Flash-Behälter (**17c**) in einer ersten Kompressorstufe komprimiert (**10**) und nach einer zweiten Kompressionsstufe (**11**) zur Endbestimmung als Sauergas ausgeschleust (**11a**). Das wasserfreie Lösungsmittel wird nach dem Wärmetausch mit wasserbeladener Lösung (**4**) im Wärmetauscher (**5**) über eine Kreislaufpumpe für die Gastrocknung (**12**) und einen Kühler (**13**) in die erste Absorptionskolonne (**1**) zurückgeführt.

Das am Kopf (**1a**) der ersten Absorptionskolonne (**1**) ausgeführte, von Sauergaskomponenten noch zu reinigende, im wesentlichen wasserfreie Erdgas (**3**) wird in eine zweite Absorptionskolonne (**14**) geführt. Dort wird das bereits im wesentlichen wasserfreie Erdgas (**3**) von Sauergasen befreit, so dass am Kopf der Absorptionskolonne (**14a**) ein getrocknetes und von Sauergasen befreites Produktgas (**15**) anfällt. Am Sumpf der zweiten Absorptionskolonne (**14b**) erhält man ein mit Sauergasen beladenes Lösungsmittel (**16**). Dieses wird in einem Flash-Behälter (**17a**) entspannt, wobei koabsorbiertes wertstoffhaltiges Gas ausgegast wird, das mittels eines Verdichters (**19**) zurück in die zweite Absorptionskolonne (**14**) geführt wird. Der Wärmetauscher oder Kühler (**18**) führt dabei die bei der Verdichtung anfallende Wärme aus dem Rückführgas ab. Ein Teilstrom des bei einer weiteren Druckentspannung in einem Flash-Behälter (**17b**) ausgeflashten Sauergases (**23**) wird in den Sumpf des Reboilers (**24**) der Regenerationskolonne (**6**) zurückgeführt. Das Lösungsmittel wird in einem weiteren Flash-Behälter (**17c**) entspannt, wobei Sauergase auf niedrigem Druckniveau anfallen, die mittels einer ersten Kompressorstufe (**10**) auf den Druck des Flash-Behälters (**17b**) komprimiert werden. Das regenerierte Lösungsmittel wird mittels der Lösungsmittelkreislaufpumpe (**21**) zurück in die für die Absorption von Sauergasen vorgesehene zweite Absorptionskolonne (**14**) zurückgeführt.

Bezugszeichenliste
- 1: Erste Absorptionskolonne
- 1a: Kopf der ersten Absorptionskolonne
- 2: Zu reinigendes Erdgas
- 3: Im wesentlichen wasserfreies Erdgas
- 4: Lösungsmittel, mit Wasser und Sauergasen beladen
- 5: Wärmetauscher
- 6: Regenerationskolonne (Lösungsmittelregenerationseinrichtung)
- 6a: Sumpf der Regenerationskolonne
- 7: Kopfgasstrom der Regenerationskolonne
- 8: Kühler oder Kondensator
- 8a: Rückgeführtes, gekühltes wasserhaltiges Kondensat
- 8b: Ausgeschleustes Kondensat
- 9: Kühler oder Kondensator
- 9a: Ausgeschleustes Wasser
- 10: Erste Kompressorstufe
- 11: Zweite Kompressorstufe
- 11a: Ausgeschleustes Sauergas
- 12: Kreislaufpumpe Gastrocknung
- 13: Wärmetauscher oder Kühler
- 14: Zweite Absorptionskolonne (Sauergasentfernungseinrichtung)
- 14a: Kopf der zweiten Absorptionskolonne
- 14b: Sumpf der zweiten Absorptionskolonne
- 15: Getrocknetes und von Sauergasen befreites Produktgas
- 16: Mit Sauergasen und Wertstoffkomponenten beladenes Lösungsmittel
- 17a,17b,17c: Flash-Behälter (Sauergaslösungsmittelregenerationseinrichtung)
- 18: Wärmetauscher oder Kühler
- 19: Verdichter
- 20: Sauergas von Flash-Behälter
- 21: Lösungsmittelkreislaufpumpe
- 22: Regeneriertes Lösungsmittel
- 23: Sauergasstrom
- 24: Aufkocher (Reboiler)

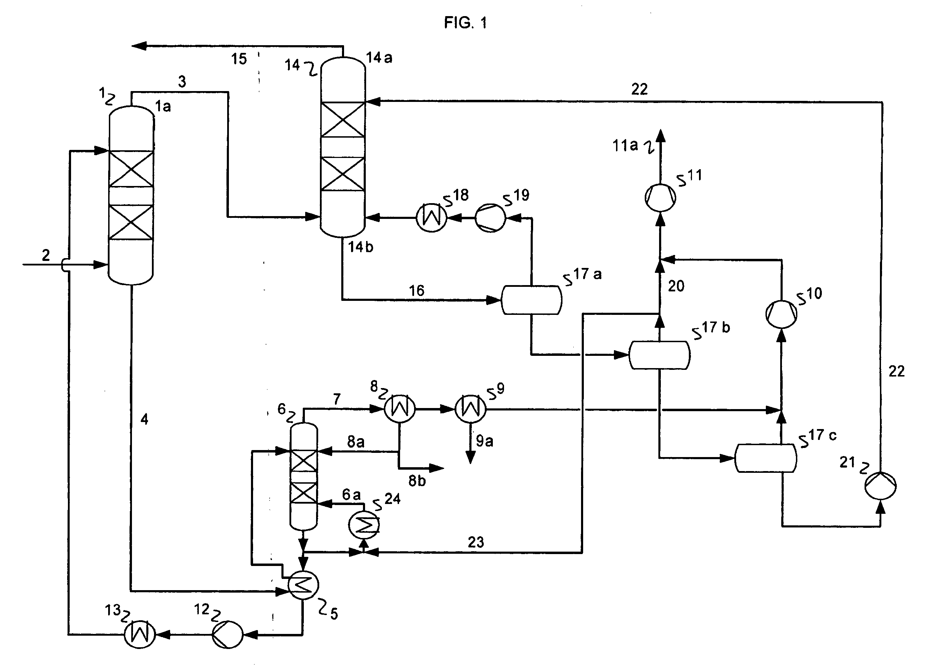

## Patentansprüche

1. Verfahren zur Entfernung von Wasser oder Wasserdampf aus technischen Nutzgasen (2) durch Absorption mit einem physikalischen Lösungsmittel (), wobei
• das Nutzgas (2) dampfförmiges Wasser und Sauergaskomponenten, enthält, und
• das zu trocknende sauergas- und wasserhaltige Nutzgas mit dem physikalischen Lösungsmittel in Kontakt gebracht wird, wobei ein weitgehend wasserfreies, sauergashaltiges Nutzgas (3) und ein wasserhaltiger Lösungsmittelstrom (4) erhalten werden, und
• der dabei erhaltene wasserhaltige Lösungsmittelstrom (4) einer Lösungsmittelregenerationseinrichtung (6) zugeführt wird, wobei ein Lösungsmittel (16) mit vermindertem Wassergehalt erhalten wird, welches dann wieder zur Absorption des Wassers aus dem Nutzgas (2) zurückgeführt wird und wieder mit dem Nutzgas (2) in Kontakt gebracht wird, und
• der nach der Absorption des Wassers aus dem Nutzgas getrocknete Nutzgasstrom (3) in eine nachgeschaltete Sauergasentfernungseinrichtung (14) geführt wird, wobei das gleiche, bereits in der Gastrocknung (1) verwendete Lösungsmittel auch für die Sauergasentfernung genutzt wird, und ein von Sauergaskomponenten weitgehend befreites Nutzgas (15) und ein sauergashaltiges Lösungsmittel (16) erhalten werden, und
• das mit Sauergaskomponenten beladene Lösungsmittel (16) in eine Sauergaslösungsmittelregenerationseinrichtung (17a,17b,17c) geführt wird, in der ein regeneriertes Lösungsmittel (22) und das aus der Lösung ausgetriebene Sauergas (11a) erhalten werden,
**dadurch gekennzeichnet, dass**
• der in der Sauergaslösungsmittelregenerationseinrichtung (17a,17b,17c) gewonnene Sauergasstrom in zwei Teilströme (20,23) aufgeteilt wird, wobei der erste Teilstrom (20) einer Verwendung zugeführt wird oder entsorgt wird, und
• wobei der zweite Teilstrom des Sauergases (23) in die für den Trocknungsprozess zugehörige Lösungsmittelregenerationseinrichtung (6) zugeführt wird, in der das im Lösungsmittel (4) angereicherte Wasser mit Hilfe dieses zweiten Sauergasteilstroms (23) aus dem Lösungsmittel ausgetrieben wird, wobei das ausgetriebene Wasser als Wasserdampf zusammen mit dem Sauergas (7) die Lösungsmittelregenerationseinrichtung verlässt.

2. Verfahren zur Entfernung von Wasser oder Wasserdampf aus technischen Gasen (2) durch Absorption mit einem physikalischen Lösungsmittel nach Anspruch 1, **dadurch gekennzeichnet, dass** der zweite Teilstrom des Sauergases (23) in den Aufkocher (24) der Lösungsmittelregenerationseinrichtung (6) geführt wird.

3. Verfahren zur Entfernung von Wasser oder Wasserdampf aus technischen Gasen (2) durch Absorption mit einem physikalischen Lösungsmittel nach Anspruch 1, **dadurch gekennzeichnet, dass** der zweite Teilstrom des Sauergasstroms (23) aus der Sauergaslösungsmittelregeneration (17a,17b,17b) in den Sumpf der Lösungsmittelregenerationseinrichtung (6) geführt wird, wobei das dem Sumpf der Lösungsmittelregenerationseinrichtung (6) zugeführte Sauergas (23) das im Lösungsmittel enthaltene Wasser aus dem im Gegenstrom herabfließenden Lösungsmittel austreibt, und das ausgetriebene Wasser als Wasserdampf zusammen mit dem Sauergas (7) die Lösungsmittelregenerationseinrichtung (6) über Kopf verlässt.

4. Verfahren zur Entfernung von Wasser oder Wasserdampf aus technischen Gasen (2) durch Absorption mit einem physikalischen Lösungsmittel nach Anspruch 1, **dadurch gekennzeichnet, dass** der zweite Teilstrom des Sauergases (23) in den Sumpf des der Lösungsmittelregenerationseinrichtung (6) zugehörigen Aufkochers (6a) zugeführt wird, wobei das dem Sumpf des Aufkochers (6a) zugeführte Sauergas (23) das im Lösungsmittel (4) enthaltene Wasser austreibt, und das ausgetriebene Wasser als Wasserdampf zusammen mit dem Sauergas (7) in den Sumpf der Lösungsmittelregenerationseinrichtung (6) geführt wird, und dort ebenfalls im Gegenstrom das Wasser als Wasserdampf zusammen mit dem Sauergas aus dem herabfließenden Lösungsmittelstrom austreibt.

5. Verfahren zur Entfernung von Wasser oder Wasserdampf aus technischen Gasen (2) durch Absorption mit einem physikalischen Lösungsmittel nach einem der Ansprüche 1 bis 4, **dadurch gekennzeichnet, dass** es sich bei den Sauergaskomponenten um Schwefelwasserstoff (H₂S), Kohlendioxid (CO₂), Kohlenoxidsulfid (COS), Merkaptane oder ein Gemisch dieser Substanzen handelt.

6. Verfahren zur Entfernung von Wasser oder Wasserdampf aus technischen Gasen (2) durch Absorption mit einem physikalischen Lösungsmittel nach einem der Ansprüche 1 bis 5, **dadurch gekennzeichnet, dass** das die Lösungsmittelregenerationseinrichtung (6) über Kopf verlassende Sauergas (7) gekühlt wird (8), und das gekühlte Kondensat (8a) auf den Kopf der Lösungsmittelregenerationseinrichtung (6) zurückgeführt wird.

7. Verfahren zur Entfernung von Wasser oder Wasserdampf aus technischen Gasen (2) durch Absorption mit einem physikalischen Lösungsmittel nach einem der Ansprüche 1 bis 6, **dadurch gekennzeichnet, dass** das die Lösungsmittelregenerationseinrichtung (6) über Kopf verlassende Sauergas (7) gekühlt wird (8), und ein Teil des gekühlten Kondensats (8b) ausgeführt wird.

8. Verfahren zur Entfernung von Wasser oder Wasserdampf aus technischen Gasen (2) durch Absorption mit einem physikalischen Lösungsmittel nach Anspruch 7, **dadurch gekennzeichnet, dass** das die Lösungsmittelregenerationseinrichtung (6) über Kopf verlassende Sauergas (7) nach der ersten Kondensation (8) weiter gekühlt wird (9), so dass der übrige Wasserdampf auskondensiert und das dadurch erhaltene kondensierte Wasser (9a) ausgeführt wird.

9. Verfahren zur Entfernung von Wasser oder Wasserdampf aus technischen Gasen (2) durch Absorption mit einem physikalischen Lösungsmittel nach einem der Ansprüche 6 bis 8, **dadurch gekennzeichnet, dass** der die Lösungsmittelregenerationseinrichtung (6) verlassende Sauergasstrom (7) nach erfolgter Entfernung des auskondensierten Wasserdampfes (9a) mit dem Sauergasstrom (20) aus der Sauergaslösungsmittelregenerationseinrichtung (17c) vereinigt wird.

10. Verfahren zur Entfernung von Wasser oder Wasserdampf aus technischen Gasen (2) durch Absorption mit einem physikalischen Lösungsmittel nach einem der Ansprüche 1 bis 9, **dadurch gekennzeichnet, dass** das physikalische Lösungsmittel für die Wasserentfernung (4) in der Lösungsmittelregenerationseinrichtung (6) durch Vorwärmung (5) oder durch einen Aufkocher (6a) auf eine Temperatur von 50 bis 180 °C eingestellt wird und die Lösungsmittelregenerationseinrichtung (6) bei einem Druck von 0 bis 10 bar betrieben wird.

11. Verfahren zur Entfernung von Wasser oder Wasserdampf aus technischen Gasen (2) durch Absorption mit einem physikalischen Lösungsmittel nach einem der Ansprüche 1 bis 9, **dadurch gekennzeichnet, dass** das physikalische Lösungsmittel für die Wasserentfernung (4) in der Lösungsmittelregenerationseinrichtung (6) durch Vorwärmung (5) oder durch einen Aufkocher (6a) auf eine Temperatur von 100 bis 140 °C eingestellt wird und die Lösungsmittelregenerationseinrichtung (6) bei einem Druck von 0,5 bis 5 bar betrieben wird.

12. Verfahren zur Entfernung von Wasser oder Wasserdampf aus technischen Gasen (2) durch Absorption mit einem physikalischen Lösungsmittel nach einem der Ansprüche 1 bis 11, **dadurch gekennzeichnet, dass** das aus der Lösungsmittelregenerationseinrichtung (6) kommende und von Wasser weitgehend befreite Lösungsmittel mit einem Kühler oder Wärmetauscher (13) gekühlt wird, bevor es wieder mit dem zu reinigenden Gas (2) in Kontakt gebracht wird.

13. Verfahren zur Entfernung von Wasser oder Wasserdampf aus technischen Gasen (2) durch Absorption mit einem physikalischen Lösungsmittel nach einem der Ansprüche 1 bis 12, **dadurch gekennzeichnet, dass** der von der Lösungsmittelregenerationseinrichtung (6) kommende Sauergasstrom (7) mit einem weiteren Sauergastrom aus der Sauergaslösungsmittelregenerationseinrichtung (17c) vereinigt wird, wobei der Druck des Sauergasstroms aus der Lösungsmittelregenerationseinrichtung (6) geringfügig höher eingestellt wird, als der Druck des weiteren Sauergasstroms.

14. Verfahren zur Entfernung von Wasser oder Wasserdampf aus technischen Gasen (2) durch Absorption mit einem physikalischen Lösungsmittel nach einem der Ansprüche 1 bis 13, **dadurch gekennzeichnet, dass** es sich bei dem physikalischen Lösungsmittel für die Wasserentfernung um N-Formylmorpholin oder Mischungen aus N-Formylmorpholin mit Derivaten des Morpholins handelt.

15. Verfahren zur Entfernung von Wasser oder Wasserdampf aus technischen Gasen (2) durch Absorption mit einem physikalischen Lösungsmittel nach einem der Ansprüche 1 bis 13, **dadurch gekennzeichnet, dass** es sich bei dem physikalischen Lösungsmittel für die Wasserentfernung um Propylencarbonat handelt.

16. Verfahren zur Entfernung von Wasser oder Wasserdampf aus technischen Gasen (2) durch Absorption mit einem physikalischen Lösungsmittel nach einem der Ansprüche 1 bis 13, **dadurch gekennzeichnet, dass** es sich bei dem physikalischen Lösungsmittel für die Wasserentfernung um alkylierte Polyalkylenglykole handelt.

17. Vorrichtung zur Entfernung von Wasser oder Wasserdampf aus technischen Gasen (2) durch Absorption mit einem physikalischen Lösungsmittel mit einem Verfahren nach einem der Ansprüche 1 bis 16, umfassend
• mindestens eine Absorptionskolonne (1) für die Gastrocknung,
• mindestens eine Lösungsmittelregenerationseinrichtung (6) für das aus der Absorptionskolonne der Gastrocknung (1) stammende wasserhaltige Lösungsmittel,
• mindestens eine weitere Absorptionskolonne (14) für das getrocknete und sauergashaltige Nutzgas,
• mindestens eine Sauergaslösungsmittelregenerationseinrichtung (17a-c),
**dadurch gekennzeichnet, dass**
• der Lösungsmittelsumpfstrom (4) der für die Gastrocknung vorgesehenen Absorptionskolonne (1) auf den Kopf der Lösungsmittelregenerationseinrichtung (6) führbar ist, und
• der Lösungsmittelsumpfstrom der Lösungsmittelregenerationseinrichtung (6) nach der Wasserentfernung zurück in die erste, für die Gastrocknung vorgesehene Absorptionskolonne (1) führbar ist, und
• das getrocknete Gas (3) der Sauergasentfernungseinrichtung (14) zuführbar ist, welche mittels eines regenerierten Lösungsmittelstroms die im Einsatzgas (2) enthaltenen Sauergaskomponenten weitgehend entfernt, und das die Sauergasentfernungseinrichtung (14) am Sumpf verlassende, mit Sauergasen beladene Lösungsmittel (16) in eine Sauergaslösungsmittelregenerationseinrichtung (17a-c) führbar ist, und ein Teilstrom (23) des in der Sauergaslösungsmittelregenerationseinrichtung (17a-c) gewonnenen Sauergases in den Sumpf der der Trocknungsanlage zugehörigen Lösungsmittelregenerationseinrichtung (6) oder in den Sumpf des dazu gehörigen Aufkochers (6a) führbar ist, und
• der Kopfgasstrom (7) der Lösungsmittelregenerationseinrichtung (6) einem Sauergasstrom aus der Sauergaslösungsmittelregenerationseinrichtung (17c) zumischbar ist oder ausgeführt wird.

18. Vorrichtung zur Entfernung von Wasser oder Wasserdampf aus technischen Gasen (2) durch Absorption mit einem physikalischen Lösungsmittel nach Anspruch 17, **dadurch gekennzeichnet, dass** es sich bei der Lösungsmittelregenerationseinrichtung (6) um eine Kolonne handelt.

19. Vorrichtung zur Entfernung von Wasser oder Wasserdampf aus technischen Gasen (2) durch Absorption mit einem physikalischen Lösungsmittel nach Anspruch 17 **dadurch gekennzeichnet, dass** es sich bei der Sauergaslösungsmittelregenerationseinrichtung (17a-c) um einen oder mehrere "Flash"-Behälter handelt.

20. Vorrichtung zur Entfernung von Wasser oder Wasserdampf aus technischen Gasen (2) durch Absorption mit einem physikalischen Lösungsmittel nach einem der Ansprüche 17 bis 19, **dadurch gekennzeichnet, dass** sich in der Verbindungsleitung (23) zwischen dem zweiten Sauergasstrom aus der Sauergaslösungsmittelregeneration (17c) und dem Sumpfeinlass zur Lösungsmittelregenerationseinrichtung (6) ein Verdichter (10) befindet.

## Claims

1. Process for the removal of water or water vapour from industrial gases (2) by absorption using a physical solvent (), wherein
• the industrial gas (2) contains vaporous water and acid gas components, and
• the industrial gas to be dried and containing acid gas and water is brought into contact with the physical solvent, yielding an industrial gas almost free of water and containing acid gas (3) as well as a water-containing solvent stream (4), and
• the water-containing solvent stream (4) thereby obtained is fed to a solvent regeneration unit (6), yielding a solvent (16) of reduced water content, which is then returned for the absorption of the water from the industrial gas (2) and again brought into contact with the industrial gas (2), and
• the industrial gas stream (3) dried after the absorption of the water from the industrial gas is conveyed to a downstream acid gas removal unit (14), using the same solvent already employed in the gas drying (1) for the removal of the acid gases, and an industrial gas (15) almost free of acid gas components and an acid gas-containing solvent (16) are obtained, and
• the solvent laden with acid gas components (16) is conveyed to an acid gas solvent regeneration unit (17a,17b,17c) in which a regenerated solvent (22) and the acid gas removed from the solution (11a) are obtained,
**characterised in that**
• the acid gas stream obtained in the acid gas solvent regeneration unit (17a,17b,17c) is divided into two part-streams (20,23), the first part-stream (20) being passed to further use or disposed of, and
• the second acid gas part-stream (23) being fed to the solvent regeneration unit related to the drying process (6) in which the water enriched in the solvent (4) is removed from the solvent with the aid of this second acid gas part-stream (23), the removed water leaving the solvent regeneration unit as water vapour together with the acid gas (7).

2. Process for the removal of water or water vapour from industrial gases (2) by absorption using a physical solvent according to claim 1, **characterised in that** the second acid gas part-stream (23) is conveyed to the reboiler (24) of the solvent regeneration unit (6).

3. Process for the removal of water or water vapour from industrial gases (2) by absorption using a physical solvent according to claim 1, **characterised in that** the second acid gas part-stream (23) from the acid gas solvent regeneration unit (17a,17b,17c) is conveyed to the bottom of the solvent regeneration unit (6), the acid gas (23) fed to the bottom of the solvent regeneration unit (6) removing the water contained in the solvent and originating from the solvent flowing down in counter-current, and the removed water leaving the head of the solvent regeneration unit (6) as water vapour together with the acid gas (7).

4. Process for the removal of water or water vapour from industrial gases (2) by absorption using a physical solvent according to claim 1, **characterised in that** the second acid gas part-stream (23) is fed to the bottom of the reboiler (6a) related to the solvent regeneration unit (6), the acid gas (23) fed to the reboiler bottom (6a) removing the water contained in the solvent (4), and the removed water being fed to the bottom of the solvent regeneration unit (6) as water vapour together with the acid gas (7), and there also removing the water from the solvent stream flowing down in counter-current as water vapour together with the acid gas.

5. Process for the removal of water or water vapour from industrial gases (2) by absorption using a physical solvent according to one of claims 1 to 4, **characterised in that** the acid gas components are hydrogen sulphide (H₂S), carbon dioxide (CO₂), carbon oxide sulphide (COS), mercaptans or a mixture of these substances.

6. Process for the removal of water or water vapour from industrial gases (2) by absorption using a physical solvent according to one of claims 1 to 5, **characterised in that** the acid gas (7) leaving the head of the solvent regeneration unit (6) is cooled (8) and the cooled condensate (8a) is returned to the head of the solvent regeneration unit (6).

7. Process for the removal of water or water vapour from industrial gases (2) by absorption using a physical solvent according to one of claims 1 to 6, **characterised in that** the acid gas (7) leaving the head of the solvent regeneration unit (6) is cooled (8) and part of the cooled condensate (8b) is discharged.

8. Process for the removal of water or water vapour from industrial gases (2) by absorption using a physical solvent according to claim 7, **characterised in that** the acid gas (7) leaving the head of the solvent regeneration unit (6) is further cooled (9) after first condensation (8) such that the residual water vapour is condensed and the condensed water (9a) thus obtained is discharged.

9. Process for the removal of water or water vapour from industrial gases (2) by absorption using a physical solvent according to one of claims 6 to 8, **characterised In that** the acid gas stream (7) leaving the solvent regeneration unit (6) is combined with the acid gas stream (20) from the acid gas solvent regeneration unit (17c) after removal of the condensed water vapour (9a).

10. Process for the removal of water or water vapour from industrial gases (2) by absorption using a physical solvent according to one of claims 1 to 9, **characterised in that** the physical solvent for the removal of water (4) in the solvent regeneration unit (6) is adjusted to a temperature of 50 to 180°C by preheating (5) or by a reboiler (6a) and the solvent regeneration unit (6) is operated at a pressure of 0 to 10 bar.

11. Process for the removal of water or water vapour from industrial gases (2) by absorption using a physical solvent according to one of claims 1 to 9, **characterised in that** the physical solvent for the removal of water (4) in the solvent regeneration unit (6) is adjusted to a temperature of 100 to 140°C by preheating (5) or by a reboiler (6a) and the solvent regeneration unit (6) is operated at a pressure of 0.5 to 5 bar.

12. Process for the removal of water or water vapour from industrial gases (2) by absorption using a physical solvent according to one of claims 1 to 11, **characterised in that** the solvent which leaves the solvent regeneration unit (6) and is almost free of water is cooled with the aid of a cooler or heat exchanger (13) prior to being brought into contact again with the gas to be purified (2),

13. Process for the removal of water or water vapour from industrial gases (2) by absorption using a physical solvent according to one of claims 1 to 12, **characterised in that** the acid gas stream (7) leaving the solvent regeneration unit (6) is combined with a further acid gas stream from the acid gas solvent regeneration unit (17c), the pressure of the acid gas stream from the solvent regeneration unit (6) being set to a slightly higher value than the pressure of the further acid gas stream

14. Process for the removal of water or water vapour from industrial gases (2) by absorption using a physical solvent according to one of claims 1 to 13, **characterised in that** the physical solvent for the removal of water is N-formyl morpholine or mixtures of N-formyl morpholine with morpholine derivatives.

15. Process for the removal of water or water vapour from industrial gases (2) by absorption using a physical solvent according to one of claims 1 to 13, **characterised in that** the physical solvent for the removal of water is propylene carbonate.

16. Process for the removal of water or water vapour from industrial gases (2) by absorption using a physical solvent according to one of claims 1 to 13, **characterised in that** the physical solvent for the removal of water is alkylated polyalkylene glycols.

17. Contrivance for the removal of water or water vapour from industrial gases (2) by absorption using a physical solvent with the aid of a process according to one of claims 1 to 16, comprising
• at least one absorption column (1) for gas drying,
• at least one solvent regeneration unit (6) for the water-containing solvent leaving the absorption column of the gas drying unit (1),
• at least one more absorption column (14) for the dried and acid gas-containing industrial gas,
• at least one acid gas solvent regeneration unit (17a-c),
**characterised In that**
• the solvent bottom stream (4) of the absorption column (1) intended for gas drying can be routed to the head of the solvent regeneration unit (6), and
• the solvent bottom stream of the solvent regeneration unit (6) can be routed back to the first absorption column (1) intended for gas drying after the removal of water, and
• the dried gas (3) can be fed to the acid gas removal unit (14) which removes major part of the acid gas components contained in the feed gas (2) by means of a regenerated solvent stream, and the solvent (16) leaving the bottom of the acid gas removal unit (14) and laden with acid gases can be fed to an acid gas solvent regeneration unit (17a-c), and a part-stream (23) of the acid gas recovered in the acid gas solvent regeneration unit (17a-c) can be routed to the bottom of the solvent regeneration unit (6) related to the drying unit or to the bottom of the related reboiler (6a), and
• the head gas stream (7) of the solvent regeneration unit (6) can be mixed with an acid gas stream from the acid gas solvent regeneration unit (17c) or is discharged.

18. Contrivance for the removal of water or water vapour from industrial gases (2) by absorption using a physical solvent according to claim 17, **characterised in that** the solvent regeneration unit (6) is a column.

19. Contrivance for the removal of water or water vapour from industrial gases (2) by absorption using a physical solvent according to claim 17, **characterised in that** the acid gas solvent regeneration unit (17a-c) is one or several flash vessels.

20. Contrivance for the removal of water or water vapour from industrial gases (2) by absorption using a physical solvent according to one of claims 17 to 19, **characterised in that** a compressor (10) is located in the connecting line (23) between the second acid gas stream from the acid gas solvent regeneration unit (17c) and the bottom inlet to the solvent regeneration unit (6).

## Revendications

1. Procédé permettant d'éliminer l'eau ou la vapeur d'eau contenue dans des gaz utiles industriels (2) par absorption au moyen d'un solvant physique (),
• le gaz utile (2) étant chargé d'eau ou de vapeur d'eau et de composants gazeux acides, et
• le gaz utile à sécher chargé d'eau et de composants gazeux acides étant mis en contact avec le solvant physique pour obtenir un gaz utile en grande partie exempt d'eau et chargé de composants gazeux acides (3) et un flux de solvant chargé d'eau, et
• le flux de solvant chargé d'eau (4) ainsi obtenu étant acheminé vers un dispositif de régénération du solvant (6), un solvant (16) avec une teneur en eau réduite étant obtenu, lequel est ensuite libéré pour absorber l'eau du gaz utile (2) et remis en contact avec le gaz utile (2), et
• le flux de gaz utile séché (3) après l'absorption de l'eau du gaz utile étant acheminé dans un dispositif d'élimination du gaz acide en aval (14), le même solvant que celui utilisé dans le séchage du gaz (1) étant également utilisé pour l'élimination du gaz acide pour obtenir un gaz utile (15) libéré en majeure partie des composants gazeux acides et un solvant contenant du gaz acide (16), et
• le solvant chargé des composants gazeux acides (16) étant acheminé dans un dispositif de régénération du solvant chargé de gaz acide (17a,17b,17c) pour obtenir un solvant régénéré (22) ainsi que le gaz acide extrait de la solution (11a),
**caractérisé en ce que**
• le flux de gaz acide généré dans le dispositif de régénération de solvant chargé de gaz acide (17a,17b,17c) est réparti en deux flux partiels (20,23), le premier flux partiel (20) étant acheminé vers une utilisation ou évacué, et
• le deuxième flux partiel de gaz acide (23) étant acheminé vers le dispositif de régénération du solvant (6) faisant partie du processus de séchage, l'eau enrichie dans le solvant (4) étant extraite du solvant à l'aide de ce deuxième courant de gaz acide (23), l'eau extraite étant évacuée du dispositif de régénération du solvant avec le gaz acide (7) sous forme de vapeur d'eau.

2. Procédé pour éliminer l'eau ou la vapeur d'eau de gaz industriels (2) par l'absorption au moyen d'un solvant physique selon la revendication 1, **caractérisé en ce que** le deuxième flux partiel de gaz acide (23) est acheminé dans le bouilleur (24) du dispositif de régénération du solvant (6).

3. Procédé pour éliminer l'eau ou la vapeur d'eau de gaz industriels (2) par l'absorption au moyen d'un solvant physique selon la revendication 1, **caractérisé en ce que** le deuxième flux partiel du gaz acide (23) provenant du dispositif de régénération de solvant chargé de gaz acide (17a,17b,17c) est acheminé au pied du dispositif de régénération du solvant (6), le gaz acide (23) acheminé au pied du dispositif de régénération du solvant (13) extrayant l'eau du solvant s'écoulant en contre-courant et l'eau extraite étant évacuée sous forme de vapeur d'eau avec le gaz acide (7) à la tête du dispositif de régénération du solvant (6).

4. Procédé pour éliminer l'eau ou la vapeur d'eau de gaz industriels (2) par l'absorption au moyen d'un solvant physique selon la revendication 1, **caractérisé en ce que** le deuxième flux partiel du gaz acide (23) est acheminé au pied du bouilleur (6a) faisant partie du dispositif de régénération du solvant (6), le gaz acide (23) acheminé au pied du bouilleur (6a) extrayant l'eau contenue dans le solvant et l'eau extraite étant acheminée sous forme de vapeur d'eau avec le gaz acide dans la partie basse du dispositif de régénération du solvant (6) et l'eau y étant évacuée à contre-courant sous forme de vapeur d'eau avec le gaz acide du flux de solvant qui s'en écoule.

5. Procédé pour éliminer l'eau ou la vapeur d'eau de gaz industriels (2) par l'absorption au moyen d'un solvant physique selon une des revendications 1 à 4, **caractérisé en ce que** les composants de gaz acide sont du gaz sulfhydrique (H₂S), du gaz carbonique (CO₂), de l'oxysulfure de carbone (COS), des mercaptans ou un mélange de ces substances.

6. Procédé pour éliminer l'eau ou la vapeur d'eau de gaz industriels (2) par l'absorption au moyen d'un solvant physique selon une des revendications 1 à 5, **caractérisé en ce que** le gaz acide (7) quittant le dispositif de régénération du solvant (6) à la tête de ce dernier est refroidi (8) et que le condensat refroidi (8a) est réacheminé à la tête du dispositif de régénération du solvant (6).

7. Procédé pour éliminer l'eau ou la vapeur d'eau de gaz industriels (2) par l'absorption au moyen d'un solvant physique selon une des revendications 1 à 6, **caractérisé en ce que** le gaz acide (7) quittant le dispositif de régénération du solvant (6) à la tête de dernier est refroidi (8) et qu'une partie du condensat refroidi (8b) est évacuée.

8. Procédé pour éliminer l'eau ou la vapeur d'eau de gaz industriels (2) par l'absorption au moyen d'un solvant physique selon la revendication 7, **caractérisé en ce que** le gaz acide (7) quittant le dispositif de régénération du solvant (6) à la tête de ce dernier continue d'être refroidi (9) après la première condensation (8) de sorte telle que la vapeur d'eau restante est, elle aussi, condensée et que l'eau condensée ainsi obtenue (9a) est évacuée.

9. Procédé pour éliminer l'eau ou la vapeur d'eau de gaz industriels (2) par l'absorption au moyen d'un solvant physique selon une des revendications 6 à 8, **caractérisé en ce que** le gaz acide (7) quittant le dispositif de régénération du solvant (6) à la tête de ce dernier après élimination de la vapeur d'eau condensée (9a) du dispositif de régénération du solvant chargé de gaz acide (17c) est fusionné.

10. Procédé pour éliminer l'eau ou la vapeur d'eau de gaz industriels (2) par l'absorption au moyen d'un solvant physique selon une des revendications 1 à 9, **caractérisé en ce que** le solvant physique utilisé pour éliminer l'eau (4) dans le dispositif de régénération du solvant (6) est amené à une température de 50 à 180 °C par préchauffage (5) ou au moyen d'un bouilleur (6a) et que le dispositif de régénération du solvant (6) fonctionne à une température de 0 à 10 bars.

11. Procédé pour éliminer l'eau ou la vapeur d'eau de gaz industriels (2) par l'absorption au moyen d'un solvant physique selon une des revendications 1 à 9, **caractérisé en ce que** le solvant physique utilisé pour l'élimination de l'eau (4) dans le dispositif de régénération du solvant (6) est amené à une température de 100 à 140 °C par préchauffage (5) ou au moyen d'un bouilleur (6a) et que le dispositif de régénération du solvant (6) fonctionne à une température de 0,5 à 5 bars.

12. Procédé pour éliminer l'eau ou la vapeur d'eau de gaz industriels (2) par l'absorption au moyen d'un solvant physique selon une des revendications 1 à 11, **caractérisé en ce que** le solvant provenant du dispositif de régénération du solvant (6) et libéré de l'eau en majeure partie est refroidi au moyen d'un refroidisseur ou d'un échangeur de chaleur (13) avant qu'il ne soit remis en contact avec le gaz à nettoyer (2).

13. Procédé pour éliminer l'eau ou la vapeur d'eau de gaz industriels (2) par l'absorption au moyen d'un solvant physique selon une des revendications 1 à 11, **caractérisé en ce que** le flux de gaz acide provenant du dispositif de régénération du solvant (6) est fusionné avec un autre flux de gaz acide provenant du dispositif de régénération du solvant chargé de gaz acide (17c), la pression du flux du gaz acide provenant du dispositif de régénération du solvant (6) étant légèrement plus élevée que la pression de l'autre flux de gaz acide.

14. Procédé pour éliminer l'eau ou la vapeur d'eau de gaz industriels (2) par l'absorption au moyen d'un solvant physique selon une des revendications 1 à 13, **caractérisé en ce que** le solvant physique utilisé pour l'élimination de l'eau est une n-formyl-morpholine ou est constitué de mélanges de n-formylmorpholine avec des dérivés de la morpholine.

15. Procédé pour éliminer l'eau ou la vapeur d'eau de gaz industriels (2) par l'absorption au moyen d'un solvant physique selon une des revendications 1 à 13, **caractérisé en ce que** le solvant physique utilisé pour l'élimination de l'eau est un carbonate de propylène.

16. Procédé pour éliminer l'eau ou la vapeur d'eau de gaz industriels (2) par l'absorption au moyen d'un solvant physique selon une des revendications 1 à 13, **caractérisé en ce que** le solvant physique utilisé pour l'élimination de l'eau est constitué de polyalkylènes-glycols.

17. Dispositif pour éliminer l'eau ou la vapeur d'eau contenue dans des gaz utiles industriels (2) par absorption au moyen d'un solvant physique avec un procédé selon une des revendications 1 à 16, comprenant
• au moins une colonne d'absorption (1) pour le séchage du gaz,
• au moins un dispositif de régénération du solvant (6) pour le solvant chargé d'eau provenant de la colonne d'absorption du séchage du gaz (1),
• au moins une deuxième colonne d'absorption (14) pour le gaz utile séché chargé de gaz acide,
• au moins un dispositif de régénération du solvant chargé de gaz acide (17a-c),
**caractérisé en ce que**
• le flux de solvant du pied (4) de la colonne d'absorption (1) prévu pour le séchage du gaz qui est acheminé à la tête du dispositif de régénération du solvant (6), et
• le flux de solvant du pied du dispositif de régénération du solvant (6) est réacheminé, après l'élimination de l'eau, dans la première colonne d'absorption (1) prévue pour le séchage du gaz, et
• le gaz séché (3) est acheminé au dispositif d'élimination du gaz acide (14), lequel élimine la majeure partie des composants de gaz acide contenus dans le gaz industriel (2) au moyen d'un flux de solvant régénéré, et le solvant chargé de gaz acide quittant le pied du dispositif d'élimination du gaz acide (14) peut être acheminé dans le dispositif de régénération du solvant chargé de gaz acide (17a-c), et un flux partiel (23) du gaz acide généré dans le dispositif de régénération du solvant chargé de gaz acide (17a-c) peut être acheminé au pied du dispositif de régénération du solvant (6) faisant partie de l'installation de séchage ou au pied du bouilleur (6a) en faisant partie.

18. Dispositif pour éliminer l'eau ou la vapeur d'eau de gaz industriels (2) par l'absorption au moyen d'un solvant physique selon la revendication 17, **caractérisé en ce que** le dispositif de régénération du solvant (6) est une colonne.

19. Dispositif pour éliminer l'eau ou la vapeur d'eau de gaz industriels (2) par l'absorption au moyen d'un solvant physique selon la revendication 17, **caractérisé en ce que** le dispositif de régénération du solvant chargé de gaz acide (17a-c) est constitué d'un ou de plusieurs réservoirs « flash ».

20. Procédé pour éliminer l'eau ou la vapeur d'eau de gaz industriels (2) par l'absorption au moyen d'un solvant physique selon une des revendications 17 à 19, **caractérisé en ce qu'**un compresseur (10) est ordonné dans la conduite de raccordement (23) entre le deuxième flux du gaz acide venant de la régénération du solvant chargé de gaz acide (17c) et l'entrée de la partie basse du dispositif de régénération du solvant (6).
